# EUROPEAN PATENT APPLICATION

(11) **EP 2 150 014 A1**
(43) Date of publication of application: **03.02.2010**
(21) Application number: 08734056.8
(22) Date of filing: 11.04.2008
(51) Int. Cl.: H04L 29/06

(54) **IPTV STREAM MEDIA SERVICE REALIZING METHOD IN IMS, NETWORK APPARATUS AND TERMINAL DEVICE**

(30) Priority: 18.05.2007 CN 200710099400
(71) Applicant: Huawei Technologies Co., Ltd., Longgang District, Shenzhen Guangdong 518129 (CN)
(72) Inventor: JIN, Wei, Shenzhen Guangdong 518129 (CN)
(74) Representative: Barth, Stephan Manuel
(86) International application number: PCT/CN2008/070698
(87) International publication number: WO 2008/141552

(57) **Abstract**

A method, a network device, and a terminal device for implementing an IPTV streaming service in an IMS are disclosed. The method for implementing the IPTV streaming service includes: receiving IPTV streaming service switching request information, where the IPTV streaming service switching request information is carried in a SIP signaling; determining information of a program that needs to be switched and information of a target terminal device according to the switching request information; and setting up a connection with the target terminal device through the SIP signaling, and sending IPTV media streams of the program to be switched onto the target terminal device through the connection. The embodiments of the present invention implement switching of an IPTV streaming service.

## Description

### FIELD OF THE INVENTION

The present invention relates to network communication technologies, and in particular, a method, a network device, and a terminal device for implementing an IPTV streaming service in an IP Multimedia Subsystem (IMS).

### BACKGROUND

The Internet Protocol Television (IPTV) service is a service for providing media streams for a terminal device through the public Internet or a private IP network. The IPTV streaming service provides abundant video and audio broadband IP multimedia information such as television programs, Live Television (LTV), and Video On Demand (VOD) on a terminal device. The terminal device here may be a Personal Computer (PC), Set-Top Box (STB), or Mobile Station (MS). The STB is a terminal device suitable for ordinary television users, and is a terminal device in the IPTV service.

In the process of developing the present invention, the inventor finds at least these defects in the prior art: The IPTV streaming service in the IMS in the prior art is unable to switch IPTV media streams between different terminal devices.

### SUMMARY

A method, a network device, and a terminal device for implementing an IPTV streaming service in an IMS are disclosed in an embodiment of the present invention to switch an IPTV media stream between different terminal devices in the IMS.

A method for implementing an IPTV streaming service in an IMS is disclosed. The method includes:
receiving IPTV streaming service switching request information;
determining information of a program that needs to be switched and information of a target terminal device according to the switching request information, and setting up a connection with the target terminal device; and
sending IPTV media streams of the program to be switched onto the target terminal device through the connection.

A method of charging for an IPTV streaming service in an IMS is disclosed in an embodiment of the present invention. The charging method includes:
recording information about IPTV media streams of a program, which are received by a source terminal device and a target terminal device before and after switching, in the process of switching the IPTV media streams of the program watched on the source terminal device to the target terminal device; and
performing charging for the source terminal device and/or the target terminal device according to the recorded information about the IPTV media streams of the program, which are received by the source terminal device and the target terminal device before and after the switching.

A network device is disclosed in an embodiment of the present invention. The network device includes:
a receiving module (700), adapted to receive IPTV streaming service switching request information from a terminal device;
a switching module (710), adapted to determine information of a program that needs to be switched and information of a target terminal device according to the IPTV streaming service switching request information received by the receiving module (700);
a connecting module (720), adapted to set up a connection with the target terminal device determined by the switching module (710); and
a playing module (730), adapted to send the IPTV media streams of the program to the target terminal device through the connection set up by the connection module (720) according to the program determined by the switching module (710) as needing to be switched.

An IPTV-based terminal device is disclosed in an embodiment of the present invention. The terminal device includes:
a switching request module, adapted to send IPTV streaming service switching request information to a network in view of the IPTV streaming service in the IMS according to information received by the terminal device;
a setup module, adapted to set up a connection with the network after the terminal device receives information of the program that needs to be switched; and
a media stream receiving module, adapted to receive the IPTV media streams from the network through the connection set up by the setup module.

### BRIEF DESCRIPTION OF THE DRAWINGS

FIG. 1 shows a switching service in an embodiment of the present invention;
FIG. 2 is a schematic diagram of forward switching in an embodiment of the present invention;
FIG. 3 is a flowchart of forward switching in an embodiment of the present invention;
FIG. 4 is the first schematic diagram of backward switching in an embodiment of the present invention;
FIG. 5 is a flowchart of backward switching in an embodiment of the present invention;
FIG. 6 is the second schematic diagram of backward switching in an embodiment of the present invention; and
Figure 7 shows a network device in an embodiment of the present invention.

### DETAILED DESCRIPTION

The IPTV streaming service implementation method disclosed in an embodiment of the present invention implements switching of the IPTV media streams of a program. That is, a technical solution to IPTV stream switching is disclosed to enable switching of the IPTV media streams.

Currently, the IMS-based IPTV media stream transmission involves no switching service. The switching service under the present invention means: After a terminal device sets up an IPTV streaming service successfully, the IPTV media streams of the IPTV streaming service are switched to another terminal device, namely, one terminal device can receive and display the IPTV media streams of the IPTV streaming service of other terminal devices. The IPTV streaming service here may be an LTV service, a Broadcast Television (BTV) service, or a VOD service. The embodiments of the present invention do not restrict the specific form of the IPTV streaming service.

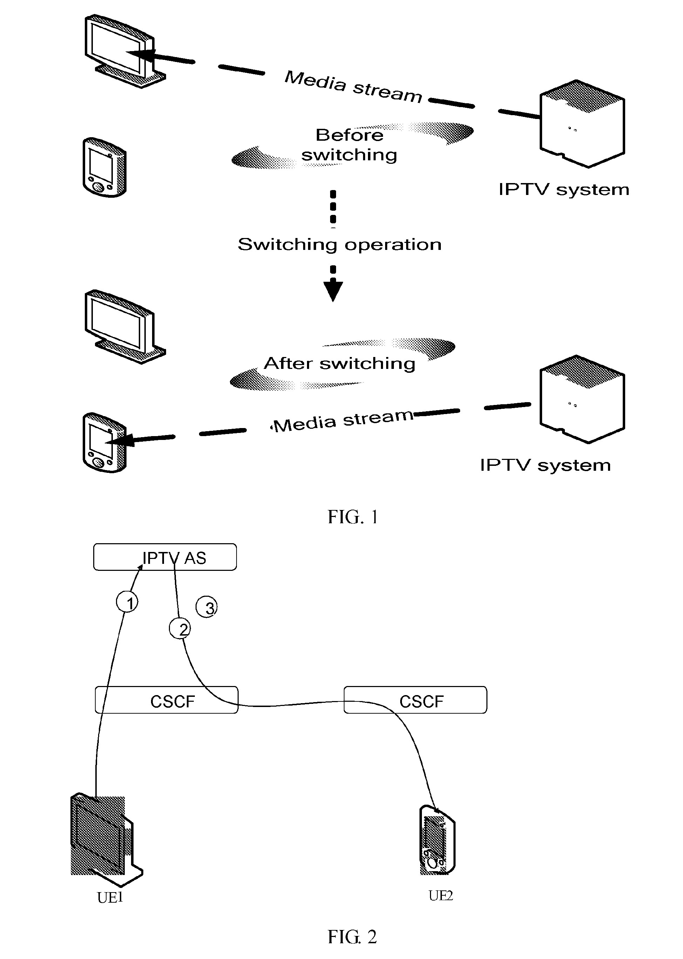

FIG. 1 shows a switching service in an embodiment of the present invention.

In FIG. 1, terminal device 1 is a source terminal device, and terminal device 2 is a target terminal device. An IPTV streaming service is set up on terminal device 1. Before the switching operation, terminal device 1 receives and displays the IPTV media streams sent from the network. After the switching operation, terminal device 2 receives and displays the IPTV media streams sent from the network.

After the switching operation, FIG. 1 shows only how terminal device 2 receives and displays the IPTV media streams from the network. However, after the switching operation, terminal device 1 may go on receiving and displaying the IPTV media streams sent from the network. That is, after completion of the switching, only the target terminal device receives and displays the IPTV media streams from the network, or, both the source terminal device and the target terminal device receive and display the IPTV media streams from the network.

Because the existing IPTV streaming service involves no switching service, some new concepts are put forward in the embodiments of the present invention. The new concepts involved in the present invention are described below.

The switching service under the present invention may be initiated by a source terminal device or a target terminal device. Depending on the switching initiator, the switching of the IPTV media streams under the present invention is categorized into forward switching and backward switching.

Forward switching means that a terminal device currently receiving IPTV media streams requests to switch the IPTV media streams to another terminal device, namely, the source terminal device requests to switch the IPTV media streams.

Backward switching means that a terminal device currently not receiving IPTV media streams requests to switch the IPTV media streams being received by another terminal device to the requesting terminal device, namely, the target terminal device requests to switch the IPTV media streams.

Backward switching may occur in another circumstance: A terminal device currently not receiving IPTV media streams requests to switch the IPTV media streams being received by another terminal device onto other terminal devices. "Other terminal devices" are all the terminal devices other than the requesting terminal device and the terminal device currently receiving the IPTV media streams. That is, the network device that requests to switch the IPTV media streams is the switching initiator, but not the target terminal device. Neither the target terminal device nor the source terminal device is the switching initiator.

Depending on the terminal device that receives the IPTV media streams of the IPTV streaming service after the completion of switching, the switching of the IPTV media streams under the present invention is categorized into shared switching and exclusive switching.

Shared switching means that: After the switching operation is completed, both parties to the switching share the media streams. That is, after the switching operation is completed, the party, which receives the IPTV media streams before switching, does not interrupt its IPTV streaming service. In other words, after the switching operation is completed, both the source terminal device and the target terminal device can receive and display the IPTV media streams.

Exclusive switching means that: After the switching operation is completed, the IPTV streaming service of the party, which receives the IPTV media streams before switching, is interrupted, and the IPTV media streams of the IPTV streaming service are exclusively seized by the target terminal device. In other words, after the switching operation is completed, the source terminal device is unable to receive the IPTV media streams, but the target terminal device can receive and display the IPTV media streams.

The terminal device under the present invention may be an STB or MS. The terminal device under the present invention supports the Session Initiation Protocol (SIP) signaling and the function of setting up a SIP session, and can be registered onto an IMS network normally. The signaling exchanged between the terminal device and the network under the present invention may be a SIP message, or a SIP signaling of other forms. The embodiments of the present invention do not restrict the specific form of the signaling exchanged between the terminal device and the network.

Taking the forward switching, backward switching, shared switching, and exclusive switching performed through a SIP message as examples, multiple switching service implementation methods in the IPTV media stream transmission process under the present invention are described below by reference to accompanying drawings.

FIG. 2 shows a forward switching service.

In FIG. 2, User Equipment 1 (UE1) and UE2 are two terminal devices involved in the switching. UE1 and UE2 may be in different IMS networks or in the same IMS network. Both UE1 and UE2 can be registered onto the corresponding IMS network normally.

In FIG. 2, UE1 is a source terminal device, namely, UE1 is the terminal device that receives the IPTV media streams normally before switching; and UE2 is a target terminal device, namely, UE2 becomes a receiver of the IPTV media streams after the completion of the switching operation. In FIG. 2, UE1 is a switching initiator.

Step 1: UE1 sends switching request information to an IPTV Application Server (AS) that provides the IPTV streaming service for UE1. The switching request information may be carried in a SIP message. The switching request information may include: information of the source terminal device, information of the target terminal device, and description information of the program that needs to be switched. The SIP message sent by UE1 1 may be routed to the IPTV AS in the form of a Public Service Identity (PSI). For example, UE1 inputs the PSI address of the forward switching service corresponding to the IPTV AS into the RequestUri of the SIP message. In this way, after the SIP message sent by UE1 is transmitted to a Call Session Control Function (CSCF), the CSCF can trigger the SIP message onto the IPTV AS according to the PSI address.

Step 2: The IPTV AS receives the SIP message from UE1, and determines that it is necessary to perform forward switching according to the PSI address in the SIP message. From the SIP message, the IPTV AS obtains information of the target terminal device and description information of the program that needs to be switched. The IPTV AS allocates resources for the forward switching, and sends to UE2 a SIP message that carries the description information of the program to be switched.

Step 3: If UE2 consents to switch the IPTV media streams, then, from the received SIP message, UE2 obtains the description information of the program to be switched, and sends a call request of watching the program to the IPTV AS according to the description information of the program. After receiving the call request, the IPTV AS sets up a connection with UE2, and sends the IPTV media streams to UE2 through the connection.

It is worthy of attention that: The connections set up between the IPTV AS and UE2 may include a signaling-plane connection and a media-plane connection. First, a signaling-plane connection is set up between the IPTV AS and UE2 through a SIP signaling, and then a media-plane connection is set up on the basis of the signaling-plane connection. The connections between the IPTV AS and UE2 in the following embodiments are the same as those described in this embodiment.

In step 3, UE2 may use the prior art to send a call request of watching the program to the IPTV AS, for example, UE2 uses the SIP Invite call mode in the IMS to send a call request. The process of setting up a connection between the IPTV AS and UE2 may be based on the method of setting up a connection in the IMS in the prior art, and the process of the IPTV AS sending IPTV media streams to UE2 may be based on the process of sending IPTV media streams in the IPTV network in the prior art. The embodiments of the present invention do not restrict the specific mode of setting up a connection or the specific mode of sending IPTV media streams.

In the forward switching process in FIG. 2, if the IPTV AS does not send completion information to UE1, UE1 can still go on receiving the IPTV media streams after the completion of the switching. In this case, the forward switching may be called "forward shared switching".

In the forward switching process in FIG. 2, if the IPTV AS sends completion information to UE1, UE1 cannot go on receiving the IPTV media streams after the completion of the switching. In this case, the forward switching may be called "forward exclusive switching".

In step 2 shown in FIG. 2, the IPTV AS may authenticate UE1. For example, after receiving a SIP message carrying switching request information from UE1, the IPTV AS authenticates UE1 to check the switching rights. If the authentication succeeds, the IPTV AS goes on with subsequent switching operations; or, if the authentication fails, the IPTV AS gives up the subsequent switching operations.

In the forward switching process shown in FIG. 2, after receiving a call request from UE2, the IPTV AS may authenticate the call request to check for the legality of the call request sent by UE2. If determining that the call request is legal, the IPTV AS sets up a call connection with UE2; or, if determining that the call request is illegal, the IPTV AS refuses to set up a call connection with UE2. The IPTV AS may use the stored authentication information to authenticate UE2. The stored authentication information here may be the authentication information allocated to UE2 when the IPTV AS receives the switching request information. The authentication information allocated to UE2 may be sent by the IPTV AS to UE2. For example, in step 2 of FIG. 2, when the IPTV AS sends a SIP message to UE2, the authentication information allocated to UE2 may be carried in the SIP message and sent to UE2, where the SIP message carries the description information of the program that needs to be switched. In this way, UE2 may use the authentication information in the process of exchanging information with the IPTV AS such as the process of setting up a call. For example, UE2 adds the authentication information transmitted from the IPTV AS into a SIP Invite message, and sends the SIP Invite message to the IPTV AS. The authentication information and the switching request information mentioned here may be carried in the header field of the messages such as SIP message and SIP Invite message, or inserted into the message body of such messages. The embodiments of the present invention neither restrict the specific form of the switching request information and the authentication information in the messages such as SIP message and SIP Invite message, nor restrict the way of UE2 obtaining the authentication information.

In the forward switching process shown in FIG. 2, the switching request information may include the playing time of the program that needs to be switched. The playing time indicates a time point from which the program is played, namely, the playing time indicates the program segment played onto the target terminal device. When the IPTV AS sends IPTV media streams of the program to UE2, the IPTV AS may send the IPTV media streams of the program to UE2, starting from a time point of the program according to the playing time.

In step 3 shown in FIG. 2, the IPTV AS may judge the time of receiving the call request. If the period between the IPTV AS sending a SIP message to UE2 and the IPTV AS receiving a call request exceeds the valid time segment denoted by the switching time information, the IPTV AS may refuse to send the IPTV media streams of the program to UE2. The switching time information may be the information preset in the IPTV AS, or the information obtained by the IPTV AS from the switching request information sent by UE1.

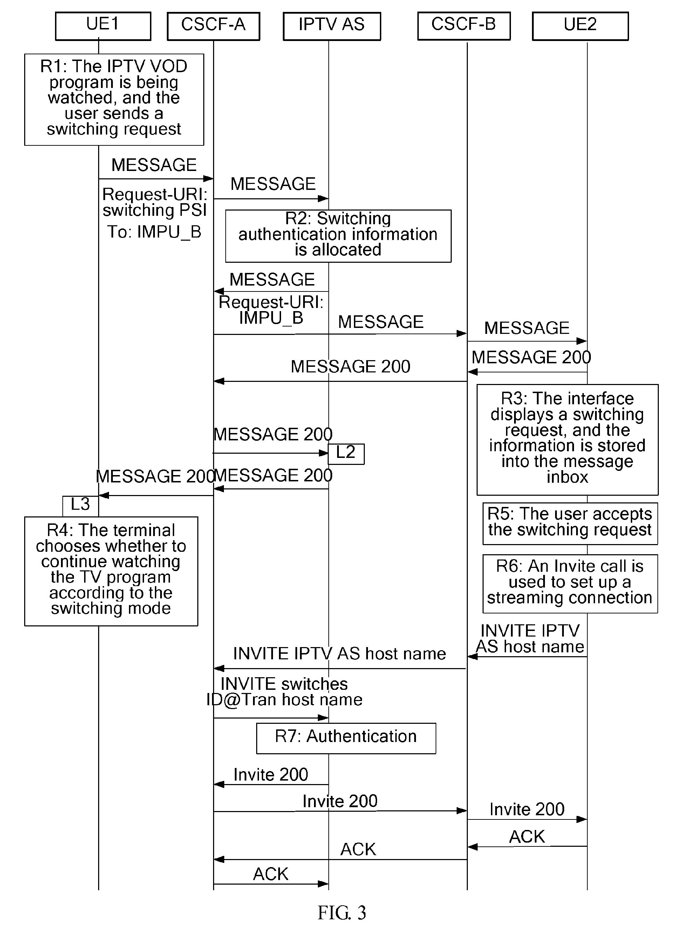

The process of implementing a forward shared switching service is detailed below by reference to FIG. 3.

Step 1: UE1 that is watching an IPTV VOD program sends a SIP message to the IPTV AS which provides the IPTV VOD program for UE1. The SIP message carries switching request information. The switching request information may include: information of UE1, information of UE2, and description information of the program that needs to be switched. The switching request information may be carried in the message body of the SIP message. The SIP message sent by UE1 to the IPTV AS may be routed to the IPTV AS by means of PSI. For example, UE1 inputs the PSI address of the forward switching service corresponding to the IPTV AS into the RequestUri of the SIP message. In this way, after the SIP message is transmitted to CSCF-A, the CSCF-A can trigger the SIP message onto the IPTV AS according to the PSI address in the SIP message.

Step 2: The IPTV AS receives the SIP message transmitted through CSCF-A, and determines that it is necessary to perform forward switching according to the PSI address in the SIP message. From the SIP message, the IPTV AS obtains IMS number of the target terminal device (namely, UE2) and description information of the program that needs to be switched. The IPTV AS allocates switching authentication information to UE2, and stores the switching authentication information of UE2, the IMS number of UE2, and the description information of the program to be switched.

Step 3: The IPTV AS allocates resources for the forward switching. Through CSCF-A and CSCF-B, the IPTV AS sends a SIP message to UE2. The SIP message sent to UE2 carries the description information of the program to be switched, and may carry the authentication information and resource location information of UE2.

In step 3, the IPTV AS may add the description information of the program to be switched into the message body of the SIP message. The RequestUri in the SIP message may be an IMS Public User Identifier (IMPU) of UE2. In this way, the SIP message sent by the IPTV AS may be routed to UE2 correctly through CSCF-A and CSCF-B.

Step 4: UE2 receives the SIP message sent by the IPTV AS through CSCF-A and CSCF-B. The message body of the SIP message carries the description information of the program to be switched. Therefore, the content in the SIP message may be presented to UE2. For example, UE2 is allowed to choose whether to watch the program, and, by this means, the content of the message body is presented to UE2. The SIP message is an instant message but the information in the SIP message may be stored into the terminal device, and the SIP message corresponds to the switching time information. Therefore, UE2 may check the information in the SIP message anytime in the validity period denoted by the switching time information, and choose to watch the program. If UE2 chooses to watch the program, it indicates that UE2 agrees to switch. Through the SIP message and the switching time information, it is prevented that the switching fails as a result of UE2 failing to choose to watch the program timely at the time of initiating the switching.

After choosing to watch the program, UE2 returns a SIP message 200 to the IPTV AS through CSCF-B and CSCF-A. After receiving the SIP message 200 returned by UE2 through CSCF-A and CSCF-B, the IPTV AS returns the SIP message 200 to UE1.

Step 5: UE2 initiates a call to the IPTV AS address in the message body of the received SIP message, for example, sends an Invite message to the IPTV AS through CSCF-B. The IPTV AS address may be input as RequestUri in the Invite message sent by UE2. The Invite message sent by UE2 may carry the authentication information transmitted from the IPTV AS. The Invite message sent by UE2 may be transmitted to the IMS domain CSCF-A of UE1 through the routing function provided by CSCF-B, and may be triggered to the IPTV AS through CSCF-A. The connection between UE2 and the IPTV AS is a new call connection initiated by UE2. Therefore, it is not necessary to switch the connection between UE1 and the IPTV AS to UE2, and no switching failure occurs as a result of UE2 failing to choose to watch the program timely at the time of initiating the switching.

Step 6: The IPTV AS identifies the authentication information in the received Invite message. If determining that the Invite message is legal according to the authentication result, the IPTV AS sets up a call connection with UE2. For example, the IPTV AS sends an Invite 200 message to UE2 through CSCF-A and CSCF-B in order to set up a call connection between the IPTV AS and UE2.

Step 7: After receiving the Invite 200 message, UE2 sends an ACK message to the IPTV AS through CSCF-B and CSCF-A.

After receiving the ACK message from UE2, the IPTV AS starts sending the IPTV media streams of the program to UE2 according to the playing time, and UE2 receives and displays the IPTV media streams. The IPTV AS may also perform charging for UE1 and UE2 according to the switching service that has occurred. In the foregoing switching process, the IPTV AS records the information of the source terminal device and the target terminal device, for example, the ID of both parties to the switching, and the program description information. Therefore, the IPTV AS may perform charging flexibly according to the charging policy. For example, if UE1 goes on receiving the IPTV media streams of the program after the completion of the switching, the IPTV AS performs charging for the IPTV media streams which are used by UE1 before and after the switching, and performs charging for the IPTV media streams which are used by UE2 after the switching. For another example, for the IPTV media streams used by UE2 after the switching, UE1 instead of UE2 is charged after the completion of the switching. The charging policy may be set according to the actual application conditions. The embodiments of the present invention do not restrict the specific form of the charging policy.

Fig. 3 describes a process of implementing a forward shared switching. The forward exclusive switching service is almost the same as that described in FIG. 3, but differs in that: The IPTV AS needs to send completion information to UE1, for example, in step 4, the IPTV AS needs to send a BYE message to UE1 after returning a SIP message 200 to UE1.

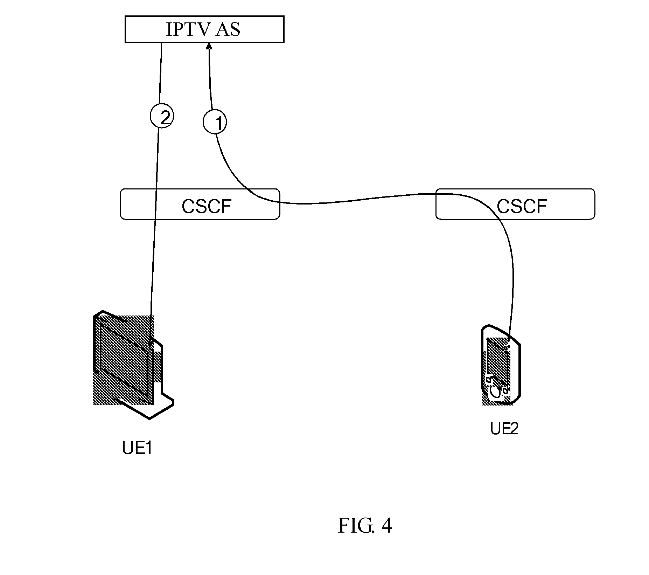

FIG. 4 shows a backward switching service.

In FIG. 4, UE1 and UE2 are two terminal devices involved in the switching. UE1 and UE2 may be in different IMS networks or in the same IMS network. Both UE1 and UE2 can be registered onto the corresponding IMS network normally.

In FIG. 4, UE1 is a source terminal device, namely, UE1 is the terminal device that receives the IPTV media streams normally before switching. UE2 is a target terminal device, namely, UE2 becomes a receiver of the IPTV media streams after the completion of the switching operation. In FIG. 4, UE2 is a switching initiator.

In FIG. 4, UE2 sends switching request information to the IPTV AS. The switching request information may be carried in a SIP message. The switching request information may include: information of the source terminal device, and information of the target terminal device. Because UE2 is not the current receiver of the program, the switching request information may not include the program description information. The SIP message sent by UE2 may be routed to the IPTV AS by means of PSI. For example, UE2 inputs the PSI address of the backward switching service corresponding to the IPTV AS into the RequestUri of the SIP message. In this way, after the SIP message sent by UE2 is transmitted to a CSCF, the CSCF can trigger the SIP message onto the IPTV AS according to the PSI address.

The IPTV AS receives the SIP message from UE2, and determines that it is necessary to perform backward switching according to the PSI address in the SIP message. The IPTV AS sends a switching notification to UE1, for example, the IPTV AS forwards the SIP message sent by UE2 to UE1. In this case, the switching request information in the SIP message is the switching notification.

The IPTV AS may obtain the information of the source terminal device and the information of the target terminal device from the SIP message.

After UE1 receives the SIP message from the IPTV AS and agrees to switch, UE1 sends switching request information to the IPTV AS that provides the IPTV streaming service for UE1. The switching request information sent by UE1 to the IPTV AS is switching permission information. The switching request information may be carried in a SIP message. The switching request information sent by UE1 (namely, switching permission) may include: information of the source terminal device, information of the target terminal device, and description information of the program that needs to be switched. The SIP message sent by UE1 may be routed to the IPTV AS by means of PSI. For example, UE1 inputs the PSI address of the forward switching service corresponding to the IPTV AS into the RequestUri of the SIP message. In this way, after the SIP message sent by UE1 is transmitted to a CSCF, the CSCF can trigger the SIP message onto the IPTV AS according to the PSI address.

The IPTV AS receives the SIP message from UE1, and determines that it is necessary to perform forward switching according to the PSI address in the SIP message. From the SIP message sent by UE1, the IPTV AS obtains information of the target terminal device and description information of the program that needs to be switched. The IPTV AS allocates resources for the switching, and sends to UE2 a SIP message that carries the description information of the program to be switched.

If UE2 consents to switch the IPTV media streams, then, from the received SIP message, UE2 obtains the description information of the program to be switched, and sends a call request of watching the program to the IPTV AS according to the description information of the program. After receiving the call request, the IPTV AS sets up a connection with UE2, and sends the IPTV media streams to UE2 through the connection.

UE2 may use the prior art to send a call request of watching the program to the IPTV AS, for example, UE2 uses the SIP Invite call mode in the IMS to send a call request. The process of setting up a connection between the IPTV AS and UE2 may be based on the method of setting up a connection in the IMS in the prior art, and the process of the IPTV AS sending IPTV media streams to UE2 may be based on the process of sending IPTV media streams in the IPTV network in the prior art. The embodiments of the present invention do not restrict the specific mode of setting up a connection or the specific mode of sending IPTV media streams.

In the backward switching process in FIG. 4, if the IPTV AS does not send completion information to UE1, UE1 can still go on receiving the IPTV media streams after the completion of the switching. In this case, the backward switching may be called "backward shared switching".

In the backward switching process in FIG. 4, if the IPTV AS sends completion information to UE1, UE1 cannot go on receiving the IPTV media streams after the completion of the switching. In this case, the backward switching may be called "backward exclusive switching".

In the backward switching process shown in FIG. 4, the IPTV AS may authenticate UE1. For example, after the IPTV AS receives the SIP message carrying switching request information from UE2, the IPTV AS authenticates the switching rights of UE1. Moreover, the IPTV AS can authenticate UE2 upon receiving a call request from UE2 in order to determine the legality of the call request sent by UE2. The detailed authentication process is given in the description about FIG. 2 above.

In the backward switching process shown in FIG. 4, after UE1 receives the switching request information forwarded by the IPTV AS, UE1 may refuse the IPTV media stream switching. For example, UE1 sends a Reject Switching response carrying rejection information to the IPTV AS. After receiving the Reject Switching response from UE1, the IPTV AS may refuse to set up a connection with UE2. Nevertheless, the IPTV AS may also refuse to set up a connection with UE2 if the IPTV AS has not received any the switching permission/rejection information from UE1 all along.

In the backward switching process shown in FIG. 4, the switching request information sent by UE1 may further carry the playing time of the program that needs to be switched. The IPTV AS may judge the time of receiving the call request. The detailed process is given in the description about FIG. 2 above.

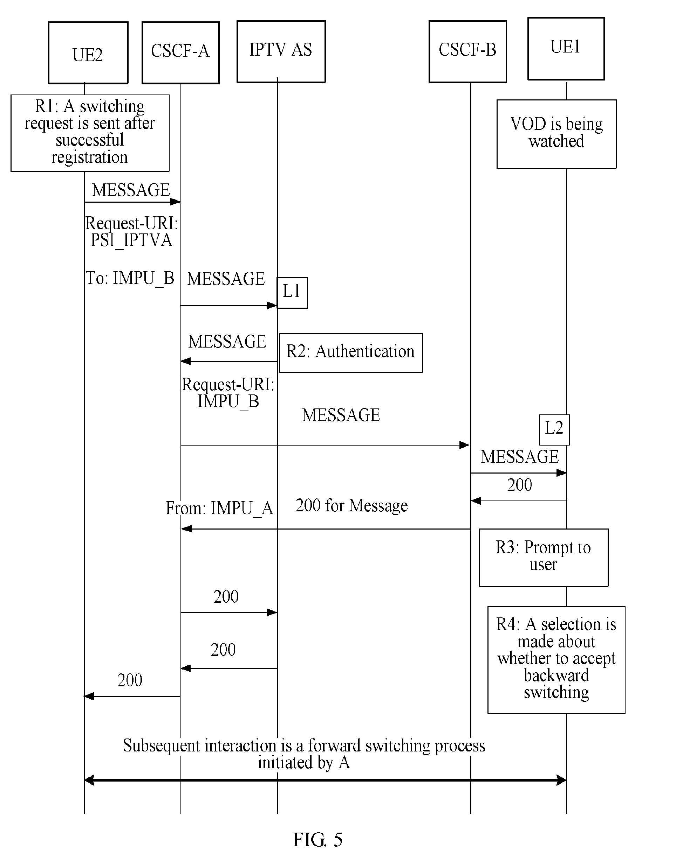

The process of implementing a backward shared switching service is detailed below by reference to FIG. 5.

Step 1: UE2 sends a SIP message to the IPTV AS that provides the IPTV streaming service for UE1. The SIP message sent by UE2 carries switching request information. The SIP message sent by UE2 to the IPTV AS may be routed to the IPTV AS by means of PSI. For example, UE2 inputs the PSI address of the backward switching service corresponding to the IPTV AS into the RequestUri of the SIP message. In this way, after the SIP message is transmitted to CSCF-B, CSCF-B can trigger the SIP message onto the IPTV AS according to the PSI address in the SIP message.

Because the switching is backward switching, the switching request information includes: information of the source terminal device, and information of the target terminal device. The switching request information may not include the description information of the program to be switched. The switching request information may be carried in the message body of the SIP message, or carried elsewhere in the SIP message (for example, in the header field of the SIP message). In this way, the SIP message sent by UE2 may carry a message body or not. When the switching request information is carried in the header field of the SIP message, the peer address of the switching request information may be carried in the To header field.

Step 2: The IPTV AS receives the SIP message transmitted through CSCF-B. The IPTV AS determines that it is necessary to perform backward switching according to the PSI address in the SIP message. The IPTV AS obtains the IMS number of the source terminal device (UE1) from the SIP message. The IPTV AS authenticates UE1. After the authentication succeeds, the IPTV AS sends a switching notification to UE1, for example, the IPTV AS forwards the SIP message sent by UE2 to UE1. The SIP message sent by the IPTV AS to UE1 may carry a message body, and the message body may carry switching request information. The SIP message sent by the IPTV AS to UE1 may be routed to UE1 through CSCB-A by means of a normal IMS routing mechanism.

Step 3: After the SIP message sent by the IPTV AS arrives at UE1, because the SIP message carries the message body of the switching request information, the content of the SIP message sent by the IPTV AS can be presented to UE1. For example, UE1 is allowed to choose whether to watch the program, and, by this means, the content of the message body is presented to UE1, and UE1 may choose whether to switch the currently receiving program onto UE2.

Step 4: After UE1 chooses to switch the currently received program onto UE2, UE1 sends switching request information to the IPTV AS that provides the IPTV streaming service for UE1. The switching request information may be carried in a SIP message. The switching request information sent by UE1 may include: information of the source terminal device, information of the target terminal device, and description information of the program that needs to be switched. The SIP message sent by UE1 may be routed to the IPTV AS by means of PSI. For example, UE1 inputs the PSI address of the forward switching service into the RequestUri of the SIP message. In this way, after the SIP message sent by UE1 is transmitted to CSCF-A, the CSCF-A can trigger the SIP message onto the IPTV AS according to the PSI address in the SIP message.

Step 5: The IPTV AS receives the SIP message transmitted through CSCF-A, and determines that it is necessary to perform forward switching according to the PSI address in the SIP message. From the SIP message, the IPTV AS obtains IMS number of the target terminal device (namely, UE2) and description information of the program that needs to be switched. The IPTV AS allocates switching authentication information to UE2, and stores the switching authentication information of UE2, the IMS number of UE2, and the description information of the program to be switched.

Step 6: The IPTV AS allocates resources for the switching. The IPTV AS sends a SIP message to UE2 through CSCF-A and CSCF-B, and the SIP message sent to UE2 carries description information of the program to be switched. The SIP message sent to UE2 may further carry the authentication information and the resource location information of UE2.

In step 6, the IPTV AS may add the description information of the program to be switched into the message body of the SIP message. The RequestUri in the SIP message may be an IMPU of UE2. In this way, the SIP message sent by the IPTV AS may be routed to UE2 correctly through CSCF-A and CSCF-B.

Step 7: UE2 receives the SIP message sent by the IPTV AS through CSCF-A and CSCF-B. The message body of the SIP message carries the description information of the program to be switched. Therefore, the content in the SIP message may be presented to UE2. For example, UE2 is allowed to choose whether to watch the program, and, by this means, the content of the message body is presented to UE2. The SIP message is an instant message but the information in the SIP message may be stored into the terminal device, and the SIP message corresponds to the switching time information. Therefore, UE2 may check the information in the SIP message anytime in the validity period denoted by the switching time information, and choose to watch the program. If UE2 chooses to watch the program, it indicates that UE2 agrees to switch. Through the SIP message and the switching time information, it is prevented that the switching fails as a result of UE2 failing to choose to watch the program timely at the time of initiating the switching.

After choosing to watch the program, UE2 returns a SIP message 200 to the IPTV AS through CSCF-B and CSCF-A. After receiving the SIP message 200 returned by UE2 through CSCF-A and CSCF-B, the IPTV AS returns the SIP message 200 to UE1.

Step 8: UE2 initiates a call to the IPTV AS address in the message body of the received SIP message, for example, sends an Invite message to the IPTV AS through CSCF-B. The IPTV AS address may be input as RequestUri in the Invite message sent by UE2. The Invite message sent by UE2 may carry the authentication information transmitted from the IPTV AS. The Invite message sent by UE2 may be transmitted to the IMS domain CSCF-A of UE1 through the routing function provided by CSCF-B, and may be triggered to the IPTV AS through CSCF-A. Likewise, the connection between UE2 and the IPTV AS is a new call connection initiated by UE2, thus further avoiding failure of switching.

Step 9: The IPTV AS identifies the authentication information in the received Invite message. If determining that the Invite message is legal according to the authentication result, the IPTV AS sets up a call connection with UE2. For example, the IPTV AS sends an Invite 200 message to UE2 through CSCF-A and CSCF-B in order to set up a call connection between the IPTV AS and UE2.

Step 10: After receiving the Invite 200 message, UE2 sends an ACK message to the IPTV AS through CSCF-B and CSCF-A.

After receiving the ACK message from UE2, the IPTV AS starts sending the IPTV media streams of the program to UE2 according to the playing time, and UE2 receives and displays the IPTV media streams. The IPTV AS may also perform charging for UE1 and UE2 according to the switching service that has occurred. The details are illustrated in FIG. 2.

Fig. 5 describes a process of implementing a backward shared switching. The backward exclusive switching service is almost the same as that described in FIG. 5, but differs in that: The IPTV AS needs to send completion information to UE1, for example, in step 7, the IPTV AS needs to send a BYE message to UE1 after returning a SIP message 200 to UE1.

In the description about FIG. 5 above, in step 4, UE1 may also reject to switch the currently receiving program to UE2, and the switching rejection information may be carried in the SIP message. In this way, in step 5, the IPTV AS may refuse to set up a connection with UE2 after receiving the SIP message that carries the switching rejection information. The IPTV AS may also refuse to set up a connection with UE2 if the IPTV AS has not received the SIP message that carries the switching permission/rejection information all along.

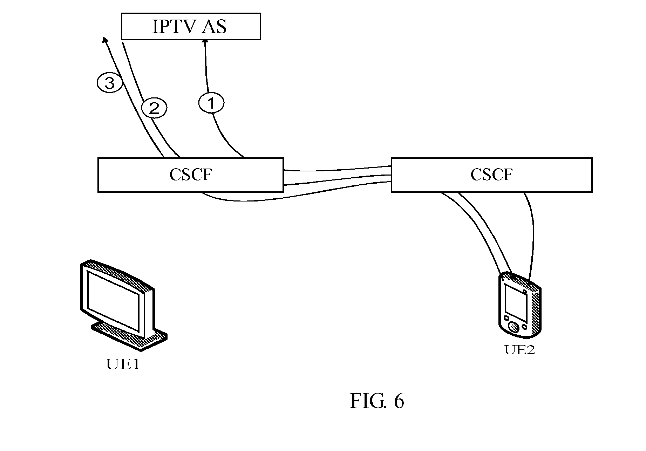

FIG. 6 shows another backward switching service.

In FIG. 6, UE1 and UE2 are two terminal devices involved in the switching. UE1 and UE2 may be in different IMS networks or in the same IMS network. Both UE1 and UE2 can be registered onto the corresponding IMS network normally.

In FIG. 6, UE1 is a source terminal device, namely, UE1 is the terminal device that receives the IPTV media streams normally before switching. UE2 is a target terminal device, namely, UE2 becomes a receiver of the IPTV media streams after the completion of the switching operation. In FIG. 6, UE2 is a switching initiator.

In FIG. 6, UE2 sends switching request information to the IPTV AS. The switching request information may be carried in a SIP message. The switching request information may include: information of the source terminal device, and information of the target terminal device. Because UE2 is not the current receiver of the program, the switching request information may not include the program description information. The SIP message sent by UE2 may be routed to the IPTV AS by means of PSI. For example, UE2 inputs the PSI address of the backward switching service corresponding to the IPTV AS into the RequestUri of the SIP message. In this way, after the SIP message sent by UE2 is transmitted to a CSCF, the CSCF can trigger the SIP message onto the IPTV AS according to the PSI address.

The IPTV AS receives the SIP message from UE2, and determines that it is necessary to perform backward switching according to the PSI address in the SIP message.

The IPTV AS queries the program currently being watched by UE1. If the IPTV AS provides the IPTV streaming service for UE1 at the same time, the IPTV AS queries the information stored in the IPTV AS to know the program currently being watched by UE1 and obtain the description information of the program to be switched. In this way, the IPTV AS may construct the description information of the program to be switched without notifying UE1, thus obtaining the information of the source terminal device, information of the target terminal device, and description information of the program to be switched. The IPTV AS allocates resources for the backward switching, and sends to UE2 a SIP message that carries the description information of the program to be switched.

If UE2 receives the SIP message from the IPTV AS and agrees to switch the IPTV media streams, then, from the received SIP message, UE2 obtains the description information of the program to be switched, and sends a call request of watching the program to the IPTV AS according to the description information of the program. After receiving the call request, the IPTV AS sets up a connection with UE2, and sends the IPTV media streams to UE2 through the connection.

UE2 may use the prior art to send a call request of watching the program to the IPTV AS, for example, UE2 uses the SIP Invite call mode in the IMS to send a call request. The process of setting up a connection between the IPTV AS and UE2 may be based on the method of setting up a connection in the IMS in the prior art, and the process of the IPTV AS sending IPTV media streams to UE2 may be based on the process of sending IPTV media streams in the IPTV network in the prior art. The embodiments of the present invention do not restrict the specific mode of setting up a connection or the specific mode of sending IPTV media streams.

In the backward switching process in FIG. 6, if the IPTV AS does not send completion information to UE1, UE1 can still go on receiving the IPTV media streams after the completion of the switching. In this case, the backward switching may be called "backward shared switching".

In the backward switching process in FIG. 6, if the IPTV AS sends completion information to UE1, UE1 cannot go on receiving the IPTV media streams after the completion of the switching. In this case, the backward switching may be called "backward exclusive switching".

In the backward switching process shown in FIG. 6, after receiving the call request from UE2, the IPTV AS may authenticate UE2 to determine legality of the call request sent from UE2. The details are given in the description about FIG. 2 above.

The process of implementing a backward shared switching service shown in FIG. 6 is detailed below.

Step 1: UE2 sends a SIP message to the IPTV AS that provides the IPTV streaming service for UE1. The SIP message sent by UE2 carries switching request information. The SIP message sent by UE2 to the IPTV AS may be routed to the IPTV AS by means of PSI. For example, UE2 inputs the PSI address of the backward switching service corresponding to the IPTV AS into the RequestUri of the SIP message. In this way, after the SIP message is transmitted to CSCF-B, CSCF-B can trigger the SIP message onto the IPTV AS according to the PSI address in the SIP message.

Because the switching is backward switching, the switching request information includes: information of the source terminal device, and information of the target terminal device. The switching request information is like that in the description about FIG. 5 above.

Step 2: The IPTV AS receives the SIP message transmitted through CSCF-B. The IPTV AS determines that it is necessary to perform backward switching according to the PSI address in the SIP message. The IPTV AS obtains the IMS number of the source terminal device (UE1) from the SIP message. The IPTV AS queries the information stored in the IPTV AS to know the program currently being watched by UE1 and obtain the description information of the program to be switched.

Step 3: The IPTV AS allocates switching authentication information to UE2, and stores the switching authentication information of UE2, the IMS number of UE2, and the description information of the program to be switched.

Step 4: The IPTV AS allocates resources for the backward switching. The IPTV AS sends a SIP message to UE2 through CSCF-A and CSCF-B, and the SIP message sent to UE2 carries description information of the program to be switched. The SIP message sent to UE2 may further carry the authentication information and the resource location information of UE2.

In step 4, the IPTV AS may add the description information of the program to be switched into the message body of the SIP message. The RequestUri in the SIP message may be an IMPU of UE2. In this way, the SIP message sent by the IPTV AS may be routed to UE2 correctly through CSCF-A and CSCF-B.

Step 5: UE2 receives the SIP message sent by the IPTV AS through CSCF-A and CSCF-B. The message body of the SIP message carries the description information of the program to be switched; therefore, the content in the SIP message may be presented to UE2. For example, UE2 is allowed to choose whether to watch the program, and, by this means, the content of the message body is presented to UE2. The SIP message is an instant message but the information in the SIP message may be stored into the terminal device, and the SIP message corresponds to the switching time information. Therefore, UE2 may check the information in the SIP message anytime in the validity period denoted by the switching time information, and choose to watch the program. If UE2 chooses to watch the program, it indicates that UE2 agrees to switch. Through the SIP message and the switching time information, it is prevented that the switching fails as a result of UE2 failing to choose to watch the program timely at the time of initiating the switching.

After choosing to watch the program, UE2 returns a SIP message 200 to the IPTV AS through CSCF-B and CSCF-A.

Step 6: UE2 initiates a call to the IPTV AS address in the message body of the received SIP message, for example, sends an Invite message to the IPTV AS through CSCF-B. The IPTV AS address may be input as RequestUri in the Invite message sent by UE2. The Invite message sent by UE2 may carry the authentication information transmitted from the IPTV AS. The Invite message sent by UE2 may be transmitted to the IMS domain CSCF-A of UE1 through the routing function provided by CSCF-B, and may be triggered to the IPTV AS through CSCF-A. Likewise, the connection between UE2 and the IPTV AS is a new call connection initiated by UE2, thus further avoiding failure of switching.

Step 7: The IPTV AS identifies the authentication information in the received Invite message. If determining that the Invite message is legal according to the authentication result, the IPTV AS sets up a call connection with UE2. For example, the IPTV AS sends an Invite 200 message to UE2 through CSCF-A and CSCF-B in order to set up a call connection between the IPTV AS and UE2. If the Invite message is determined as illegal according to the authentication result, the IPTV AS refuses to set up a connection with UE2, and the switching process is ended.

Step 8: After receiving the Invite 200 message, UE2 sends an ACK message to the IPTV AS through CSCF-B and CSCF-A. After receiving the ACK message from UE2, the IPTV AS starts sending the IPTV media streams of the program to UE2 according to the playing time, and UE2 receives and displays the IPTV media streams. The IPTV AS may also perform charging for UE1 and UE2 according to the switching service that has occurred. The details are illustrated in FIG. 2.

As described above, the embodiments of the present invention enable switching of an IPTV streaming service in the IMS domain. The switching service under the present invention is triggered by a source terminal device, or by a target terminal device. The switching service is implemented as permitted by the source terminal device, or implemented without notifying the source terminal device, thus making the switching service flexibly accomplishable according to the actual requirements. When the switching service is implemented without notifying the source terminal device, the program watched by the source terminal device may be monitored. A SIP signaling is used to carry the switching request information and the call request in the switching process. Therefore, the process of setting up the IPTV media streams in the switching is the same as the process of setting up an ordinary session in the IMS. In this way, the workload of developing the switching service is reduced, and it is easier to implement the switching service because the existing devices such as CSCF need no improvement. The switching request information is transmitted through a SIP message, switching time information is employed, and UE2 initiates a new call connection to the IPTV AS. Therefore, the target terminal device can choose at convenient time whether to start watching the switched program, and the target terminal device does not need to make a switching response or watch the switched program hardly when the switching is initiated. The switching success ratio is improved, and the switching service can be implemented more flexibly. By using the playing time, the target terminal device can receive the predetermined segment of the switched program. By means of performing charging for the source terminal device and the target terminal device according to the information about the IPTV media streams of the program, which are received by the source terminal device and the target terminal device before and after the switching, the charging process ensures accuracy of the charging for the switching service.

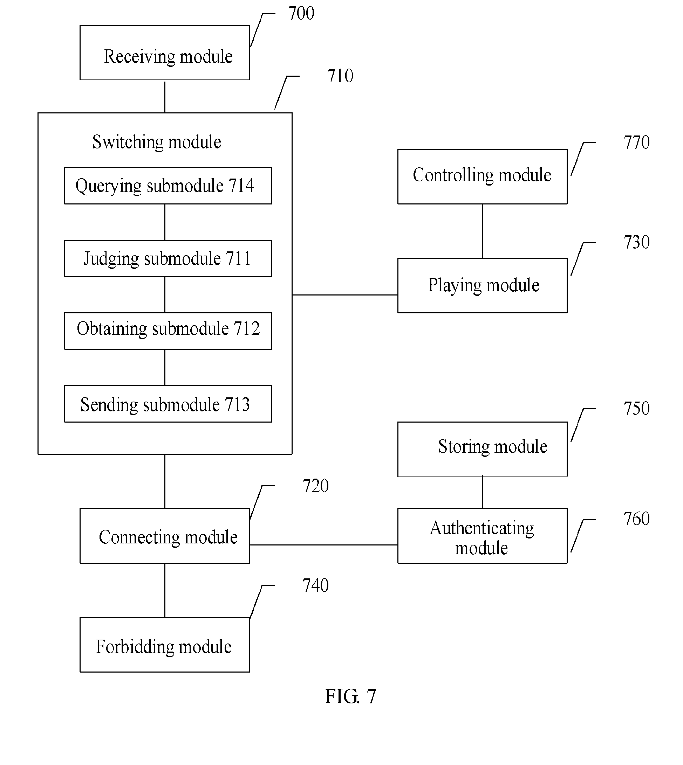

The network device disclosed in an embodiment of the present invention is detailed below by reference to FIG. 7.

The network device shown in FIG. 7 is an IPTV AS, which includes a receiving module 700, a switching module 710, a connecting module 720, and a playing module 730. The network device may optionally include: a forbidding module 740, or a storing module 750 and an authenticating module 760, or a controlling module 770, or any combination thereof.

The receiving module 700 is adapted to receive an IPTV streaming service switching request information from a terminal device. The switching request information may be switching request information sent by the source terminal device, or switching request information sent by the target terminal device. The switching request information may be carried in the SIP message. The content and the transmission mode of the switching request information are described in the foregoing method embodiment.

The switching module 710 is adapted to determine the program that needs to be switched and the target terminal device according to the IPTV streaming service switching request information received by the receiving module 700. In the forward switching process, the switching module 710 obtains the information of the program that needs to be switched and information of the target terminal device directly from the switching request information received by the receiving module 700 and sent by the source terminal device. In the backward switching process, the switching module 710 may send a switching notification to the source terminal device after the receiving module 700 receives switching request information from the target terminal device, and then obtain the description information of the program to be switched from the switching permission information sent by the source terminal device. Nevertheless, in the backward switching process, the switching module 710 may query the network to obtain the description information of the program to be switched without sending a switching notification to source terminal device.

In practice, if a backward switching scenario exists, the switching module 710 may include a judging submodule 711, an obtaining submodule 712, and a sending submodule 713; or, the switching module 710 includes a judging submodule 711, an obtaining submodule 712, and a querying submodule 714; or the switching module 710 includes a judging submodule 711, an obtaining submodule 712, a sending submodule 713, and a querying submodule 714.

The judging submodule 711 is adapted to judge whether the switching request information carries description information of the program to be switched, and output a judgment result. The judging submodule 711 determines whether the switching request information includes description information of the program to be switched according to the PSI address in the SIP message that carries the switching request information. For example, when the PSI address corresponds to the forward switching address of the corresponding network device, it is determined that the switching request information includes the description information of the program to be switched; otherwise, it is determined that the switching request information includes no description information of the program to be switched.

The obtaining submodule 712 is adapted to: obtain the description information of the program to be switched and the information of the target terminal device in the switching request information if the judging submodule 711 determines that the switching request information includes the description information of the program to be switched; and obtain the information of the source terminal device and the information of the target terminal device in the switching request information, and transmit the information of the source terminal device to the sending submodule 713 if the judging submodule 711 determines that the switching request information includes no description information of the program to be switched.

The sending submodule 713 is adapted to send a switching notification to the source terminal device if the judging submodule 711 determines that the switching request information includes no description information of the program to be switched and receives the information of the source terminal device from the obtaining submodule 712. The switching notification may be switching request information sent by the target terminal device, namely, the sending submodule 713 may forward the switching request information sent by the target terminal device to the source terminal device.

After receiving the switching notification, the source terminal device returns switching permission/forbidding information to the network device. For example, if the source terminal device permits switching, it returns switching request information to the network device. The switching request information includes the description information of the program to be switched. The switching request information may be carried in a SIP message, and the PSI address of the SIP message may be the forward switching address of the network device.

The querying submodule 714 is adapted to query the network to obtain the program being played to the source terminal device and obtain the description information of the program to be switched if the judging submodule 711 determines that the switching request information includes no description information of the program to be switched. If the network device that holds the querying submodule 714 is an application server that provides the IPTV streaming service for the source terminal device, the querying submodule 714 queries the information stored in the network device to obtain the program being watched by the source terminal device. The detailed query process is described in the foregoing method embodiment.

The connecting module 720 is adapted to set up a connection with the target terminal device determined by the switching module 710. The connecting module 720 may allocate resources for the switching. The connecting module 720 may set up a call connection with the target terminal device through a SIP signaling. The connecting module 720 may be restricted by the forbidding module 740 and the authenticating module 760 when setting up the call connection with the target terminal device. That is, when the authentication for the source terminal device fails, the connecting module 720 is unable to set up a call connection with the target terminal device; when the authentication for the target terminal device fails, the connecting module 720 is unable to set up a call connection with the target terminal device; when a switching rejection is received from the source terminal device, the connecting module 720 is unable to set up a call connection with the target terminal device.

The forbidding module 740 is applied to an application scenario of the backward switching process in which the switching needs to be consented by the source terminal device. After determining that the receiving module 700 receives a switching rejection from the source terminal device, the forbidding module 740 forbids the connecting module 720 to set up a connection with the target terminal device. The forbidding module 740 may also forbid the connecting module 720 to set up a connection with the target terminal device according to the switching time information. The process of the source terminal device sending a switching rejection and the switching time information are described in the foregoing method embodiment.

The storing module 750 is adapted to store the information of the authentication for the terminal device.

The authenticating module 760 may authenticate the source terminal device, or the target terminal device, or both the source terminal device and the target terminal device.

The authentication process performed by the authenticating module 760 for the source terminal device may be: In the forward switching scenario, after the receiving module 700 receives the switching request information transmitted from the source terminal device, the authenticating module 760 authenticates the source terminal device. If the authentication fails, the authenticating module 760 forbids the connecting module 720 to send the SIP message that carries the program description information to the target terminal device. The SIP message sent by the connecting module 720 to the target terminal device may carry resource location information.

Alternatively, the authentication process performed by the authenticating module 760 for the source terminal device may be: In the backward switching scenario, after the receiving module 700 receives the switching request information transmitted from the target terminal device, the authenticating module 760 authenticates the source terminal device. If the authentication fails, the authenticating module 760 forbids the sending submodule 713 to send a switching notification to the source terminal device, namely, forbids the connecting module 720 to set up a call connection with the target terminal device.

The authentication process performed by the authenticating module 760 for the target terminal device may be: In the forward switching scenario, after the receiving module 700 receives the switching request information transmitted from the source terminal device, the authenticating module 760 allocates authentication information to the target terminal device, and stores the allocated authentication information into the storing module 750. When sending the SIP message that carries program description information to the target terminal device, the connecting module 720 adds the authentication information about the target terminal device stored in the storing module 750 into the SIP message, and sends the SIP message to the target terminal device. In this way, after the receiving module 700 receives a call request from the target terminal device, the authenticating module 760 may identify the authentication information carried in the call request according to the authentication information stored in the storing module 750, namely, verify the legality. When the authentication fails, the authenticating module 760 forbids the connecting module 720 to perform the backward operation of setting up a call connection with the target terminal device. The SIP message sent by the connecting module 720 to the target terminal device may carry resource location information.

Alternatively, the authentication process performed by the authenticating module 760 for the target terminal device may be: In the backward switching scenario, after the receiving module 700 receives the switching request information transmitted from the source terminal device or from the target terminal device, the authenticating module 760 allocates authentication information to the target terminal device, and stores the allocated authentication information into the storing module 750. When sending the SIP message that carries program description information to the target terminal device, the connecting module 720 adds the authentication information about the target terminal device stored in the storing module 750 into the SIP message, and sends the SIP message to the target terminal device. In this way, after the receiving module 700 receives a call request from the target terminal device, the authenticating module 760 may identify the authentication information carried in the call request according to the authentication information stored in the storing module 750, namely, verify the legality. When the authentication fails, the authenticating module 760 forbids the connecting module 720 to perform the backward operation of setting up a call connection with the target terminal device. The SIP message sent by the connecting module 720 to the target terminal device may carry resource location information.

The detailed authentication process performed by the authenticating module 760 for the source terminal device and the target terminal device is described in the foregoing method embodiment.

The controlling module 770 is adapted to control the corresponding network device to continue or stop sending the IPTV media streams of the switched program to the source terminal device. For example, in a shared switching process, the controlling module 770 sends no BYE message to the source terminal device. Therefore, the playing module 730 continues sending the IPTV media streams of the switched program to the source terminal device after the completion of the switching. For an example, in an exclusive switching process, the controlling module 770 sends a BYE message to the source terminal device. Therefore, the playing module 730 stops sending the IPTV media streams of the switched program to the source terminal device after the completion of the switching.

The playing module 730 is adapted to send the IPTV media streams of the switched program to the target terminal device according to the connection set up by the connecting module 720. The playing module 730 may send the IPTV media streams of the switched program to the target terminal device alone, or to both the source terminal device and the target terminal device simultaneously, as controlled by the controlling module 770. When sending the IPTV media streams of the switched program, the playing module 730 needs to obtain the information of the target terminal device and the description information of the program to be switched, and such information may be provided by the switching module 710. When sending the IPTV media streams of the program, the playing module 730 may play the program according to the playing time received by the receiving module 700. The playing time is described in the foregoing method embodiment.

The terminal device disclosed in an embodiment of the present invention is detailed below.

The terminal device provided herein holds a switching request module, or holds a switching request module and a setup module.

The switching request module is adapted to send switching request information to a network in view of the IPTV streaming service in the IMS according to information received by the corresponding terminal device. The switching request module may add the IPTV streaming service switching request information into a SIP signaling for sending. The switching request module may send the switching request information when the terminal device receives a control command transmitted from the outside. For example, in the forward switching process, the switching request module sends switching request information when the Switch menu of the terminal device is selected or when the Switch button is clicked. For an example, in the backward switching process, the terminal device sends switching request information upon receiving a switching notification from the network. The switching request information may be carried in a SIP message for transmission. The process of the switching request module sending the switching request information, the content of the switching request information, and the information carried in the SIP message are described in the foregoing method embodiment.

The setup module is adapted to set up a connection with the network after the terminal device receives description information of the program that needs to be switched. The program description information received by the setup module may be the program description information carried in the SIP message. The SIP message received by the setup module may further carry resource allocation information and authentication information. The setup module may set up a call connection with the network through a SIP signaling, for example, set up a call connection with the IPTV AS through an Invite message. The Invite message may carry authentication information. The process of setting up a connection between the terminal device and the network is described in the foregoing method embodiment.

As described above, the method, the network device, and the terminal device disclosed herein enable switching of an IPTV streaming service in the IMS domain. The switching service under the present invention is triggered by a source terminal device, or by a target terminal device. The switching service is implemented as permitted by the source terminal device, or implemented without notifying the source terminal device, thus making the switching service flexibly accomplishable according to the actual requirements. When the switching service is implemented without notifying the source terminal device, the program watched by the source terminal device may be monitored. A SIP signaling is used to carry the switching request information and the call request in the switching process. Therefore, the process of setting up the IPTV media streams in the switching is the same as the process of setting up an ordinary session in the IMS. In this way, the workload of developing the switching service is reduced, and it is easier to implement the switching service because the existing devices such as CSCF need no improvement. The switching request information is transmitted through a SIP message, switching time information is employed, and UE2 initiates a new call connection to the IPTV AS. Therefore, the target terminal device can choose at convenient time whether to start watching the switched program, and the target terminal device does not need to make a switching response or watch the switched program hardly when the switching is initiated. The switching success ratio is improved, and the switching service can be implemented more flexibly. By using the playing time, the target terminal device can receive the predetermined segment of the switched program. The UE is charged for the IPTV media streams which are used by the source terminal device and the target terminal device before the switching, and for the IPTV media streams which are used after the switching, respectively. Therefore, the charging process ensures accuracy of the charging for the switching service.

Although the invention has been described through several preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for implementing an Internet Protocol Television, IPTV, streaming service in an IP Multimedia Subsystem, IMS, comprising:
receiving IPTV streaming service switching request information;
determining information of a program that needs to be switched and information of a target terminal device according to the switching request information, and setting up a connection with the target terminal device; and
sending IPTV media streams of the program to be switched onto the target terminal device through the connection.

2. The method of claim 1, wherein the process of receiving the IPTV streaming service switching request information comprises:
receiving the IPTV streaming service switching request information from a source terminal device; or
receiving the IPTV streaming service switching request information from the target terminal device; or
receiving the IPTV streaming service switching request information from a third-party terminal device other than the source terminal device and the target terminal device.

3. The method of claim 2, wherein the process of determining the information of the program that needs to be switched and the information of the target terminal device according to the switching request comprises:
obtaining the information of the program that needs to be switched and the information of the target terminal device from the switching request information sent by the source terminal device.

4. The method of claim 2, wherein the process of determining the information of the program that needs to be switched and the information of the target terminal device according to the service switching request comprises:
obtaining the information of the source terminal device and the information of the target terminal device from the switching request information sent by the target terminal device.
sending a switching notification to the source terminal device;
receiving switching permission information sent by the source terminal device; and
obtaining the information of the program to be switched in the switching permission information.

5. The method of claim 2, wherein the process of determining the information of the program that needs to be switched and the information of the target terminal device according to the service switching request information comprises:
obtaining the information of the source terminal device and the information of the target terminal device from the switching request information sent by the target terminal device, and querying a network to obtain the program being played to the source terminal device to obtain the information of the program to be switched.

6. The method of claim 1, wherein the process of the setting up the connection with the target terminal device comprises:
sending the information of the program to be switched to the target terminal device, and receiving a call request sent by the target terminal device according to the information of the program; and
setting up the connection with the target terminal device according to the call request.

7. The method of claim 1, wherein the process of sending the IPTV media streams of the program to be switched to the target terminal device comprises:
obtaining playing time of the program to be switched;
determining a segment of the program that needs to be sent to the target terminal device according to the playing time, and sending the IPTV media streams corresponding to the segment.

8. The method of claim 1, further comprising:
continuing sending the IPTV media streams of the program onto the source terminal device after completion of the switching; or
stopping sending the IPTV media streams of the program onto the source terminal device after the completion of the switching.

9. The method according to any one of claims 1-8, wherein:
the switching request information, the switching notification, the switching permission information, and switching rejection information are routed by means of Public Service Identity, PSI.

10. A method of charging for an Internet Protocol Television, IPTV, streaming service in an IP Multimedia Subsystem, IMS, comprising:
recording information about IPTV media streams of a program, which are received by a source terminal device and a target terminal device before and after switching, in the process of switching the IPTV media streams of the program watched on a source terminal device to a target terminal device; and
performing charging for the source terminal device and/or the target terminal device according to the recorded information about the IPTV media streams of the program, which are received by the source terminal device and the target terminal device before and after the switching.

11. A network device, located in an IP Multimedia Subsystem, IMS, network, comprising:
a receiving module (700), adapted to receive Internet Protocol Television, IPTV, streaming service switching request information from a terminal device;
a switching module (710), adapted to determine information of a program that needs to be switched and information of a target terminal device according to the IPTV streaming service switching request information received by the receiving module (700);
a connecting module (720), adapted to set up a connection with the target terminal device determined by the switching module (710); and
a playing module (730), adapted to send the IPTV media streams of the program to the target terminal device through the connection set up by the connection module (720) according to the program determined by the switching module (710) as needing to be switched.

12. The network device of claim 11, wherein:
the switching module (710) comprises: a judging submodule (711), an obtaining submodule (712), and a sending submodule (713); or comprises: a judging submodule (711), an obtaining submodule (712), and a querying submodule (714);
the judging submodule (711) is adapted to judge whether the switching request information comprises information of the program to be switched, and output a judgment result;
the obtaining submodule (712) is adapted to: obtain the information of the program to be switched and information of the target terminal device in the switching request if the judging submodule (711) determines that the switching request information comprises the information of the program to be switched; and obtain information of the source terminal device and the information of the target terminal device in the switching request information, obtain the information of the program to be switched in switching permission information received by the network device, or obtain the information of the program to be switched in a query result of the querying submodule (714) if the judging submodule (711) determines that the switching request information comprises no information of the program to be switched;
the sending submodule (713) is adapted to send a switching notification to the source terminal device obtained by the obtaining submodule (712) if the judging submodule (711) determines that the switching request information comprises no description information of the program to be switched; and
the querying submodule (714) is adapted to query the network to obtain the program being played to the source terminal device if the judging submodule (711) determines that the switching request information comprises no description information of the program to be switched.

13. The network device of claim 12, further comprising:
a forbidding module (740), adapted to forbid the connecting module (720) to set up a connection with the target terminal device if the receiving module (700) receives switching rejection information from the source terminal device.

14. The network device of claim 12, further comprising:
a storing module (750), adapted to store information about authentication for the terminal device;
an authenticating module (760), adapted to perform authentication according to authentication information stored in the storing module (750) after the network device receives the switching request information or a call request from the terminal device; permit the connecting module (720) to set up the connection with the target terminal device if the authentication succeeds, or forbid the connecting module (720) to set up the connection with the target terminal device if the authentication fails.

15. The network device of claim 12, further comprising:
a controlling module (770), adapted to control the corresponding network device to continue or stop sending the IPTV media streams of the program onto the source terminal device.

16. An Internet Protocol Television, IPTV, -based terminal device, comprising:
a switching request module, adapted to send IPTV streaming service switching request information to a network in view of an IPTV streaming service in an IP Multimedia Subsystem, IMS, according to information received by the terminal device;
a setup module, adapted to set up a connection with the network after the terminal device receives information of a program that needs to be switched; and
a media stream receiving module, adapted to receive IPTV media streams from the network through the connection set up by the setup module.
